# EUROPÄISCHE PATENTSCHRIFT

(11) **EP 3 980 661 B1**
(45) Veröffentlichungstag und Bekanntmachung des Hinweises auf die Patenterteilung: **09.08.2023**
(21) Anmeldenummer: 20714493.2
(22) Anmeldetag: 13.03.2020
(51) Int. Cl.: F16D 65/18

(54) **BREMSVORRICHTUNG**
BRAKE
FREIN

(30) Priorität: 24.04.2019 AT 601082019; 09.07.2019 AT 506252019
(43) Veröffentlichungstag der Anmeldung: 13.04.2022
(73) Patentinhaber: GreenBrakes GmbH, 8230 Hartberg (AT)
(72) Erfinder: PUTZ, Michael, 8272 Sebersdorf (AT)
(74) Vertreter: Gibler & Poth Patentanwälte KG
(86) Internationale Anmeldenummer: PCT/EP2020/056954
(87) Internationale Veröffentlichungsnummer: WO 2020/216527

(56) Entgegenhaltungen:
- EP-A1- 0 614 024
- EP-A2- 0 291 071
- EP-A2- 0 698 749
- EP-B1- 0 698 749
- CN-A- 107 965 536
- US-A- 4 109 765
- US-A1- 2002 017 437
- US-A1- 2013 126 280

## Beschreibung

Die Erfindung betrifft eine Bremsvorrichtung gemäß dem Oberbegriff des Patentanspruches 1.

Es sind Bremsvorrichtungen bekannt, welche über einen Bremssattel mit einer ersten Reibfläche verfügen, wobei am Bremssattel ein Andrückteil mit einer zweiten Reibfläche beweglich gelagert ist. Der zu bremsende Körper, üblicherweise eine Bremsscheibe, ist zwischen den beiden Reibflächen angeordnet, wobei zum Betätigen der Bremsvorrichtung die beiden Reibflächen auf den zu bremsenden Körper gedrückt werden. Eine Möglichkeit der Betätigung der Bremsvorrichtungen ist eine hydraulische Betätigung, bei welcher direkt über einen hydraulischen Druck die Anpresskraft für die Betätigung der Bremsvorrichtung bereitgestellt wird.

Weiters ist es bekannt die Anpresskraft der Reibflächen mechanisch mittels eines Hebels aufzubringen. Eine derartige Bauform ist bei Lastkraftwägen mit Druckluftbremssystemen weit verbreitet, da die Druckluft üblicherweise alleine nicht genug Druck zur ausreichenden Betätigung der Bremsvorrichtungen aufbringt. Mittel eines durch Druckluft betätigten Kolbens wird hierbei mittels eines Hebels ein als Hebel ausgebildeter Spreizkörper verdreht, wobei die Verdrehung des Hebels das Andrückteil von dem Bremssattel abdrückt und somit die Reibflächen zusammendrückt. Durch die Verdrehung des Spreizkörpers kommt es neben einer Bewegungskomponente der beiden Reibflächen zueinander entlang einer Geraden üblicherweise auch zu einer Bewegungskomponente senkrecht zu dieser Geraden. Dies führt entweder dazu, dass das Andrückteil nicht linear an dem Bremssattel geführt werden kann, wodurch eine entsprechend aufwendige Lagerung des Andrückteils am Bremssattel notwendig ist, oder im Falle einer linearen Führung des Andrückteils am Bremssattel dazu, dass es zu Relativbewegungen zwischen dem Andrückteil, dem Spreizkörper und dem Bremssattel quer zur Richtung der linearen Führung kommt.

Aus der DE 10 2017 004 436 A1 geht eine Bremsvorrichtung mit einem als Hebel ausgebildeten Spreizkörper hervor. Die Betätigung des Spreizkörpers erfolgt mittels eines linear geführten Stößels, wobei der Stößel an einem ersten Ende am Spreizkörper anliegt und an einem zweiten Ende mittels einer Betätigungsschnecke verschoben werden kann. Der Spreizkörper ist herkömmlich geformt, sodass eine Verdrehung des Spreizkörpers eine seitliche Bewegungskomponente auf das Andrückteil bewirkt.

Aus der WO 03/042565 A1 ist eine Bremsvorrichtung mit einem Spreizkörper bekannt. Der Spreizkörper ist mittels eines Hebels verschwenkbar, wobei der Spreizkörper zwischen zwei, linear zueinander verschiebbaren Betätigungsflächen angeordnet ist. Bei einer Verdrehung des Spreizkörpers kommt es zu einer seitlichen Bewegungskomponente zwischen dem Spreizkörper und der Betätigungsfläche, wobei entweder der Spreizkörpers an der Betätigungsfläche reibt oder Rollkörper eine Ausgleichsbewegung durchführen.

Aus der WO 01 /044677 A1 ist eine Bremsvorrichtung mit einem Spreizkörper bekannt, wobei eine Betätigungsmechanik für den Spreizkörper derart ausgebildet ist, dass eine Betätigungsenergie als Federenergie gespeichert wird. Der Spreizkörper selber übt bei der Verdrehung eine seitliche Bewegungskomponente auf die Betätigungsfläche aus.

Aus der EP 0 614 024 A1 ist eine Bremsvorrichtung umfassend einen Bremssattel mit Schenkeln, einem Verbindungsabschnitt, einer Reibfläche, einer erste Betätigungsfläche, einem drehbaren Spreizkörper mit einer ersten Spreizkörperoberfläche, eine Abrollfläche und einen Verschleißnachsteller bekannt.

Aus der EP 0 698 749 A2 ist eine Bremsvorrichtung bekannt, wobei ein Andrückteil derart gelagert ist, dass es senkrecht zur Bremsscheibenebene beweglich ist und eine Pendelbewegung des Andrückteiles vermieden wird.

Aus der US 4 109 765 A ist eine Bremsvorrichtung umfassend einen Bremssattel mit einem ersten Schenkel, einem zweiten Schenkel und einen, den ersten Schenkel mit dem zweiten Schenkel verbindenden Verbindungsabschnitt bekannt. Weiters ist am Bremssattel ein Andrückteil der Bremsvorrichtung entlang einer ersten Geraden linear geführt.

Aus der US 2002/017437 A1 ist eine Bremsvorrichtung bekannt, welche pneumatisch, hydraulisch oder elektrisch angetrieben werden kann.

Aus der EP 0 291 071 A2 und der US 2013/126280 A1 sind Bremsvorrichtungen umfassend einen Bremssattel mit einem ersten Schenkel, einem zweiten Schenkel und einem, den ersten Schenkel mit dem zweiten Schenkel verbindenden Verbindungsabschnitt bekannt.

Aus der CN 107 965 536 A ist eine Bremsvorrichtung umfassend eine Führungsaufnahme zur Verbindung mit einem Lagerbauteil unter Ausbildung einer in Richtung einer ersten Geraden verschiebbaren Lagerung der Bremsvorrichtung bekannt.

Nachteilig daran ist, dass diese Relativbewegungen zu einem Reiben zwischen verschiedenen Flächen bei der Betätigung der Bremsvorrichtung führen, wodurch der Verschleiß und der Betätigungsaufwand für die Bremsvorrichtung wesentlich erhöht werden. Es besteht zwar die Möglichkeit diese Relativbewegungen quer zur Richtung der linearen Führung über weitere Wälzlager oder Ausgleichsvorrichtungen aufzufangen, dadurch wird aber der Herstellungsaufwand beziehungsweise die Baugröße der Bremsvorrichtung vergrößert und der Betätigungsaufwand für die Bremsvorrichtung oftmals ebenfalls erhöht.

Aufgabe der Erfindung ist es daher eine Bremsvorrichtung der eingangs genannten Art anzugeben, mit welcher die genannten Nachteile vermieden werden können, und welche bei geringem Verschleiß zuverlässig und mit geringen Betätigungswiderständen funktioniert, aber dennoch einfach und kompakt ausgebildet werden kann.

Erfindungsgemäß wird dies durch die Merkmale des Patentanspruches 1 erreicht. Dadurch ergibt sich der Vorteil, dass die Bremsvorrichtung bei geringem Verschleiß zuverlässig und mit geringen Betätigungswiderständen funktioniert, aber dennoch einfach und kompakt ausgebildet werden kann. Hierbei hat sich überraschenderweise gezeigt, dass es möglich ist, das Andrückteil entlang einer ersten Gerade linear am Bremssattel zu führen, wobei die erste Spreizkörperfläche mit einer der beiden Betätigungsflächen bei dem Betätigen unmittelbar in Kontakt ist und auf dieser abrollt, wobei die Relativbewegungen des Andrückteils zu dem Bremssattel normal zu der ersten Gerade vernachlässigbar gering gehalten werden können. Bei einem Verdrehen des Spreizkörpers aus einer Ausgangsposition heraus wird dabei eine durch die Drehung verursachte relative Abstandsänderung quer zur ersten Gerade zwischen den beiden Spreizkörperoberflächen durch die Abrollbewegung zumindest einer der Spreizkörperoberflächen an zumindest einer der Betätigungsflächen zumindest zum Teil ausgeglichen, wodurch die Relativbewegung zwischen dem Bremssattel und dem Andrückteil normal zur ersten Gerade gering gehalten werden kann. Durch das direkte Abrollen des Spreizkörpers an zumindest einer der beiden Betätigungsflächen kommt dabei die Bremsvorrichtung ohne ein zusätzliches Wälzlager an dieser kritischen Stelle aus. Hierbei ist gerade die Interaktion des Spreizkörpers mit den beiden Betätigungsflächen für den Betätigungswiderstand und Verschleiß besonders wichtig, da hier die Kräfte auf die Reibflächen unmittelbar aufgebracht werden müssen. Die Bremsvorrichtung kann daher mit besonders wenigen beweglichen Teilen ausgebildet werden, wodurch diese sehr zuverlässig ist.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform der Bremsvorrichtung in Seitenansicht als Prinzipiendarstellung;
Fig. 2 Teile der ersten bevorzugten Ausführungsform der Bremsvorrichtung in Aufsicht als Prinzipiendarstellung;
Fig. 3 eine zweite bevorzugte Ausführungsform der Bremsvorrichtung in Seitenansicht als Prinzipiendarstellung; und
Fig. 4 eine Darstellung der Abrollbewegung des Spreizkörpers gemäß der bevorzugten Ausführungsformen der Bremsvorrichtung.

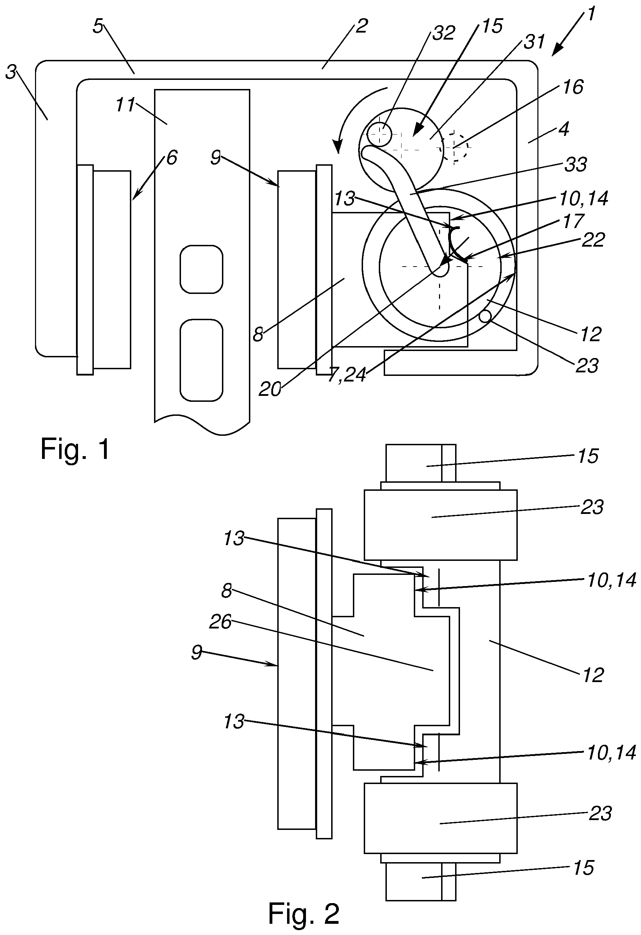

Die Fig. 1 bis 4 zeigen zumindest Teile einer bevorzugten Ausführungsform einer Bremsvorrichtung 1 umfassend einen Bremssattel 2 mit einem ersten Schenkel 3, einem zweiten Schenkel 4 und einem, den ersten Schenkel 3 mit dem zweiten Schenkel 4 verbindenden Verbindungsabschnitt 5, wobei an einer ersten Innenseite des ersten Schenkels 3 eine erste Reibfläche 6 angeordnet ist, und an einer zweiten Innenseite des zweiten Schenkels 4 eine erste Betätigungsfläche 7 angeordnet ist, wobei am Bremssattel 2 ein Andrückteil 8 der Bremsvorrichtung 1 entlang einer ersten Gerade linear geführt ist, wobei das Andrückteil 8 eine, der ersten Reibfläche 6 zugewandte zweite Reibfläche 9, sowie eine, der zweiten Reibfläche 9 abgewandte zweite Betätigungsfläche 10 aufweist, wobei ein Bereich zwischen der ersten Reibfläche 6 und der zweiten Reibfläche 9 zur Anordnung eines Bremskörpers 11 vorgesehen ist, wobei die Bremsvorrichtung 1 einen mit der ersten Betätigungsfläche 7 und der zweiten Betätigungsfläche 10 zusammenwirkenden drehbaren Spreizkörper 12 aufweist, wobei bei einer zur Betätigung der Bremsvorrichtung 1 erfolgenden Drehung des Spreizkörpers 12 eine erste Spreizkörperoberfläche 13 mit einer ersten Abrollfläche 14 unmittelbar in Kontakt ist und auf der ersten Abrollfläche 14 im Wesentlichen abrollt, und wobei die erste Abrollfläche 14 der ersten Betätigungsfläche 7 oder der zweiten Betätigungsfläche 10 entspricht.

Dadurch ergibt sich der Vorteil, dass die Bremsvorrichtung 1 bei geringem Verschleiß zuverlässig und mit geringen Betätigungswiderständen funktioniert, aber dennoch einfach und kompakt ausgebildet werden kann. Hierbei hat sich überraschenderweise gezeigt, dass es möglich ist, das Andrückteil 8 entlang einer ersten Gerade linear am Bremssattel 2 zu führen, wobei die erste Spreizkörperfläche 13 mit einer der beiden Betätigungsflächen 7,10 bei dem Betätigen unmittelbar in Kontakt ist und auf dieser abrollt, wobei die Relativbewegungen des Andrückteils 8 zu dem Bremssattel 3 normal zu der ersten Gerade vernachlässigbar gering gehalten werden können. Bei einem Verdrehen des Spreizkörpers aus einer Ausgangsposition 18 heraus wird dabei eine durch die Drehung verursachte relative Abstandsänderung quer zur ersten Gerade zwischen den beiden Spreizkörperoberflächen 13,22 durch die Abrollbewegung zumindest einer der Spreizkörperoberflächen 13,22 an zumindest einer der Betätigungsflächen 7,10 zumindest zum Teil ausgeglichen, wodurch die Relativbewegung zwischen dem Bremssattel 2 und dem Andrückteil 8 normal zur ersten Gerade gering gehalten werden kann. Durch das direkte Abrollen des Spreizkörpers 12 an zumindest einer der beiden Betätigungsflächen 7,10 kommt dabei die Bremsvorrichtung 1 ohne ein zusätzliches Wälzlager an dieser kritischen Stelle aus. Hierbei ist gerade die Interaktion des Spreizkörpers 12 mit den beiden Betätigungsflächen 7,10 für den Betätigungswiderstand und Verschleiß besonders wichtig, da hier die Kräfte auf die Reibflächen 6,9 unmittelbar aufgebracht werden müssen. Die Bremsvorrichtung 1 kann daher mit besonders wenigen beweglichen Teilen ausgebildet werden, wodurch diese sehr zuverlässig ist.

Insbesondere kann auch ein Verfahren zum Betreiben der gegenständlichen Bremsvorrichtung vorgesehen sein.

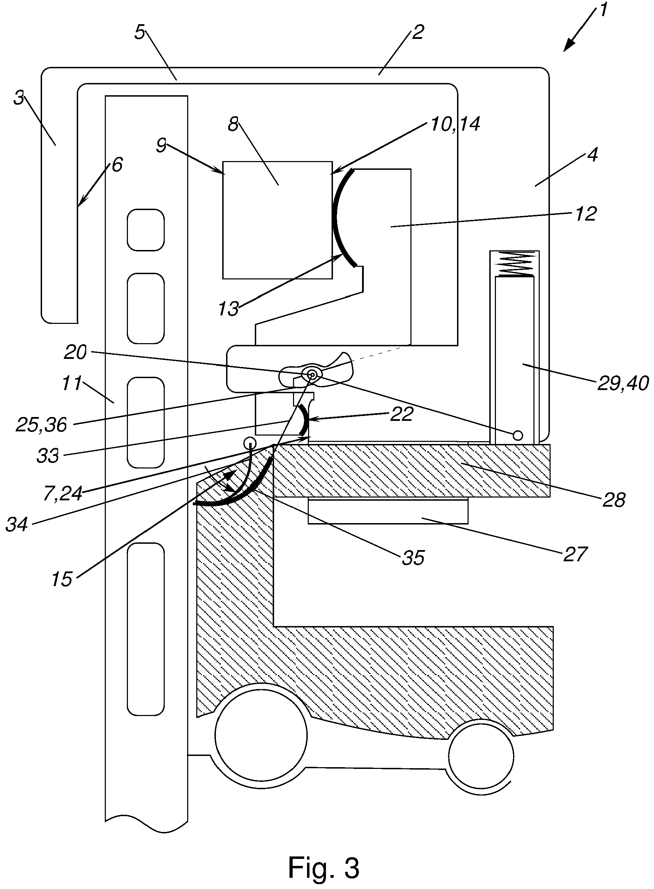

Die Bremsvorrichtung 1 ist insbesondere als Fahrzeugbremse ausgebildet und weist einen Bremssattel 2 auf, welcher zwei gegenüberliegende Schenkel 3,4 aufweist, welche über einen Verbindungsabschnitt 5, insbesondere fest, miteinander verbunden sind. Der Bremssattel 2 kann insbesondere einstückig ausgebildet sein. Alternativ kann der Bremssattel 2 aus mehreren Teilen zusammengesetzt sein. Am Bremssattel 2 ist das Andrückteil 8 zumindest mittelbar, bevorzugt unmittelbar, derart gelagert, dass das Andrückteil 8 zu dem Bremssattel 2 eine translatorische Bewegung entlang der ersten Gerade ausführen kann. Relativbewegungen zwischen dem Andrückteil 8 und dem Bremssattel 2 quer zu der ersten Gerade sind lediglich im Rahmen der üblichen Toleranzen möglich. Die Lagerung des Andrückteils 8 zu dem Bremssattel 2 ist in den Fig. 1 und 3 nicht eingezeichnet.

An dem ersten Schenkel 3 und dem, dem ersten Schenkel 3 zugewandten Ende des Andrückteils 8 sind die erste Reibfläche 6 und die zweite Reibfläche 9 angeordnet. Die Reibflächen 6,9 können insbesondere als auswechselbare Bremsbacken ausgebildet sein. Die Reibflächen 6,9 begrenzen beidseitig eine Aufnahme für den zu bremsenden Bremskörper 11 und sind dazu vorgesehen, durch eine Reibkraft eine Relativbewegung des Bremskörpers 11 zu der Bremsvorrichtung 1 zu bremsen. Die translatorische Bewegung des Andrückteils 8 zu dem Bremssattel 2 führt analog zu einer Relativbewegung der Reibflächen 6,9 zueinander in Richtung der ersten Gerade.

Bevorzugt kann ein Radlager umfassend eine Bremsscheibe als Bremskörper 11 und die Bremsvorrichtung 1 vorgesehen sein, wobei eine Drehachse der Bremsscheibe parallel zur ersten Gerade verläuft.

Bevorzugt kann ein Fahrzeug umfassend wenigstens ein Radlager vorgesehen sein.

Weiters kann ein Fahrzeug umfassend eine Bremsvorrichtung 1 vorgesehen sein.

Das Fahrzeug kann insbesondere ein PKW, LKW oder Anhänger sein.

Eine Bremsvorrichtung 1 mit einer rotierenden Bremsscheibe kann auch für andere Fahrzeuge, beispielsweise Bahnen und Propeller, vorgesehen sein.

Weiters kann der Bremskörper 11 auch zu einer translatorischen Relativbewegung zu der Bremsvorrichtung 1 vorgesehen sein, insbesondere bei einer Bremsschiene für einen Aufzug.

Auch ist eine Verwendung der Bremsvorrichtung 1 in einer stationär angeordneten Maschine denkbar.

An dem zweiten Schenkel 4 und dem, dem ersten Schenkel 3 abgewandten Ende des Andrückteils 8 sind die Betätigungsflächen 7,10 angeordnet. Die Betätigungsflächen 7,10 sind dazu vorgesehen die Anpresskräfte aufzunehmen, welche über den Bremssattel 2 und das Andrückteil 8 an die jeweilige Reibfläche 6,9 übertragen werden.

Insbesondere kann vorgesehen sein, dass zumindest bei einer Betätigung der Bremsvorrichtung 1 die erste Betätigungsfläche 7 im Wesentlichen lagefest zu der ersten Reibfläche 6 ist, und/oder dass die zweite Betätigungsfläche 10 im Wesentlichen lagefest zu der zweiten Reibfläche 9 ist. Hierbei kann vorgesehen sein, dass ein etwaiger Verschleiß durch den Verschleißnachsteller 26 ausgeglichen werden kann, ansonsten aber die erste Betätigungsfläche 7 lagefest zu der ersten Reibfläche 6 ist, und/oder die zweite Betätigungsfläche 10 lagefest zu der zweiten Reibfläche 9 ist.

Zur Betätigung der Bremsvorrichtung 1 ist ein drehbarer Spreizkörper 12 vorgesehen, wobei der Spreizkörper 12 mit der ersten Betätigungsfläche 7 und der zweiten Betätigungsfläche 10 zusammenwirkt. Der Spreizkörper 12 und die Betätigungsflächen sind derart geformt, dass bei einer Drehung des Spreizkörpers 12 in eine erste Drehrichtung der Spreizkörper 12 die beiden Betätigungsflächen 7,10 auseinander drückt, sodass das Andrückteil 8 die zweite Reibfläche 9 in Richtung der ersten Reibfläche 6 drückt und der Bremssattel 2 die erste Reibfläche 6 in Richtung der zweiten Reibfläche 9 zieht.

Bevorzugt ist die erste Spreizkörperoberfläche 13 lagefest zu dem restlichen Spreizkörper 12. Weiters kann vorgesehen sein, dass auch die zweite Spreizkörperoberfläche 22 lagefest zu dem restlichen Spreizkörper 12 ist, daher auch zur ersten Spreizkörperoberfläche 13.

Der Spreizkörper 12 kann besonders bevorzugt einstückig ausgebildet sein.

Die Drehung des Spreizkörpers 12 erfolgt in einer Drehebene, welche durch die erste Gerade und einer, zur ersten Gerade orthogonal stehenden zweiten Geraden aufgespannt wird. Diese Drehebene steht daher orthogonal zu der Drehachse 20 des Spreizkörpers.

Der Spreizkörper 12 kann insbesondere zwischen einer Ausgangsposition 18 und einer Endposition 30 verdreht werden. Dabei entspricht die Ausgangsposition 18 einem gelösten Zustand der Bremsvorrichtung 1. Die Endposition 30 entspricht einem Zustand der Bremsvorrichtung 1 bei maximaler Bremskraft. Für die Betätigung der Bremsvorrichtung 1 wird der Spreizkörper 12 aus der Ausgangsposition 18 in Richtung der Endposition 30 verdreht. In den Fig. 1 und 3 ist der Spreizkörper 12 in der Ausgangsposition 18 dargestellt. In den Fig. 2 ist ein Teil des Spreizkörpers 12 sowohl in der Ausgangsposition 18 als auch in der Endposition 30 dargestellt.

Insbesondere kann vorgesehen sein, dass die Ausgangsposition 18 einem Ausgangswinkel des Spreizkörpers 12, und die Endposition 30 einem Endwinkel des Spreizkörpers 12 entspricht, wobei der Ausgangswinkel und der Endwinkel einen Betriebswinkelbereich des Spreizkörpers 12 aufspannen, in welchem Betriebswinkelbereich der Spreizkörper 12 im vorgesehenen Betrieb verdrehbar ist. Der Betriebswinkelbereich kann insbesondere einen Winkel von wenigstens 15°, insbesondere wenigstens 20°, besonders bevorzugt wenigstens 25°, aufweisen. Dieser vergleichsweise große Betriebswinkelbereich ermöglicht eine kompakte Bauform der Bremsvorrichtung 1. Bevorzugt kann der Betriebswinkelbereich einen Winkel von maximal 35° aufweisen.

Bei einer zur Betätigung der Bremsvorrichtung 1 erfolgenden Drehung des Spreizkörpers 12 ist die erste Spreizkörperoberfläche 13 mit der ersten Abrollfläche 14 unmittelbar in Kontakt, wobei die Spreizkörperoberfläche 13 auf der ersten Abrollfläche 14 im Wesentlichen abrollt. Die erste Abrollfläche 14 kann hierbei entweder der ersten Betätigungsfläche 7 oder der zweiten Betätigungsfläche 10 entsprechen. Dass die erste Spreizkörperoberfläche 13 mit der ersten Abrollfläche 14 unmittelbar in Kontakt ist bedeutet, dass keine zusätzlichen Wälzkörper zwischen der ersten Spreizkörperoberfläche 13 und der ersten Abrollfläche 14 angeordnet ist. Im Wesentlichen Abrollen bedeutet, dass ein geringfügiger Schlupf zwischen der ersten Spreizkörperoberfläche 13 und der ersten Abrollfläche 14 beim Abrollen möglich ist.

Besonders bevorzugt entspricht die erste Abrollfläche 14 der zweiten Betätigungsfläche 10, wie dies beispielhaft in den bevorzugten Ausführungsformen in den Fig. 1 bis 4 dargestellt ist. In diesem Fall ist bei einer zur Betätigung der Bremsvorrichtung 1 erfolgenden Drehung des Spreizkörpers 12 die erste Spreizkörperoberfläche 13 mit einer zweiten Betätigungsfläche 10 unmittelbar in Kontakt und rollt auf der zweiten Betätigungsfläche 10 im Wesentlichen ab.

Der Spreizkörper 12 weist eine zweite Spreizkörperoberfläche 22 auf, welche mit jener Betätigungsfläche 7,10 zusammenwirkt, welche nicht die erste Abrollfläche 14 ist. Insbesondere kann vorgesehen sein, dass die zweite Spreizkörperoberfläche 22 mit der ersten Betätigungsfläche 7 zusammenwirkt.

Bei dem Betätigen der Bremsvorrichtung 1 werden die Betätigungsflächen 7,10 durch die Drehung des Spreizkörpers 12 von den Spreizkörperoberflächen 13,22 parallel zur ersten Gerade in entgegengesetzten Richtungen gedrückt.

Bei dem Betätigen der Bremsvorrichtung 1 drehen sich die erste Spreizkörperoberfläche 13 und die zweite Spreizkörperoberfläche 22 um eine gemeinsame Drehachse 20 des Spreizkörpers 12. Die erste Spreizkörperoberfläche 13 ist gegenüber der Drehachse 20 und/oder der zweiten Spreizkörperoberfläche 22 derart angeordnet, dass beim Verdrehen von der Ausgangsposition 18 in Richtung der Endposition 30 ein Abstand der ersten Spreizkörperoberfläche 13 gegenüber der Drehachse 20 und/oder der zweiten Spreizkörperoberfläche 22 stetig zunimmt. Durch das gleichzeitig erfolgende Abrollen der ersten Spreizkörperoberfläche 13 an der Abrollfläche 14, also der mit der ersten Spreizkörperoberfläche 13 in Kontakt stehenden Betätigungsfläche 7, 10, wird allerdings diese Relativänderung des Abstandes der ersten Spreizkörperoberfläche 13 gegenüber der Drehachse 20 und/oder der zweiten Spreizkörperoberfläche 22 parallel zur zweiten Geraden bezüglich der Abrollfläche 14 wieder zumindest zum Teil ausgeglichen.

Insbesondere kann vorgesehen sein, dass der Spreizkörper 12 mit einer Betätigungsmechanik 15 wirkverbunden ist, wobei der Spreizkörper 12 mittels der Betätigungsmechanik 15 verdrehbar ist. Die Betätigungsmechanik 15 kann insbesondere über einen Aktuator betätigt werden. Die Betätigungsmechanik 15 ist ausgebildet den Spreizkörper 12 vorgebbar um die Drehachse 20 zu verdrehen.

Bevorzugt kann vorgesehen sein, dass zum Verdrehen des Spreizkörpers 12 der Spreizkörper 12 über die Betätigungsmechanik 15 mit einem Elektromotor 16 wirkverbunden ist. Hierbei bildet der Elektromotor 16 den Aktuator für die Betätigungsmechanik 15 aus. Die Betätigungsmechanik 15 übersetzt dabei eine Drehbewegung des Elektromotors 16 in eine Drehbewegung des Spreizkörpers 12. Der Elektromotor 16 kann insbesondere ein Servomotor sein. Der Elektromotor 16 kann insbesondere am Bremssattel 2 befestigt sein. In der Wirkung unterscheidet sich eine Betätigung mittels eines Elektromotors 16 gegenüber einer Betätigung mittels Hydraulik oder Pneumatik darin, dass mittels des Elektromotors 16 eine Position des Spreizkörpers 12 vorgebbar ist, während bei der Hydraulik oder Pneumatik lediglich ein Drehmoment des Spreizkörpers 12 vorgebbar ist. Dadurch sind die Anforderungen eines Elektromotors 16 an die Präzision der Bewegungsabläufe der Betätigungsmechanik 15 und des Spreizkörpers 12 wesentlich höher, da Fehlstellungen nicht einfach automatisch ausgeglichen werden können. Obwohl ein Elektromotor 16 ansonsten viele Vorteile gegenüber einer Hydraulik oder Pneumatik hat, sind elektromechanische Bremsen oftmals sehr komplex ausgebildet. Die gegenständliche Bremsvorrichtung 1 mit einem Elektromotor 16 erlaubt dagegen eine präzise Vorgabe der Bewegungsabläufe mit einem vergleichsweise einfachen Aufbau.

Besonders bevorzugt ist weiters vorgesehen, dass der Elektromotor 16 als bürstenloser Gleichstrommotor ausgebildet ist. Ein derartiger Elektromotor 16 wird im Englischen auch als BLDC-Motor bezeichnet, wobei BLDC - in an sich bekannter Weise - für Brushless Direct Current steht.

Insbesondere kann eine Bremsanlage umfassend wenigstens eine Bremsvorrichtung 1 vorgesehen sein, wobei die Bremsanlage insbesondere wenigstens eine Steuer- und Kontrolleinheit und wenigstens einen Regler aufweist, um den Elektromotor 16 anzusteuern bzw. eine entsprechende Regelung des Elektromotors 16 zu ermöglichen. Der Regler ist elektrisch mit dem Elektromotor 16 verbunden, und beispielsweise umfassend einer Inverterschaltung oder Brückenschaltung ausgebildet. Der Regler kann als jeder beliebige Regler sowie zufolge jeglichen beliebigen Verfahrens ausgebildet sein, sofern der Regler dazu ausgebildet bzw. in der Lage ist zu regeln, und zwar insbesondere eine Position und/oder ein Moment. Der Regler muss selbstverständlich technisch dazu in der Lage sein, den jeweils ausgewählten Elektromotor 16 zu regeln.

Bei der gegenständlich bevorzugten Ausführung des Elektromotors 16 als BLDC-Motor ist bevorzugt vorgesehen, dass der Regler als speziell für BLDC-Motoren ausgebildeter bzw. vorgesehener Regler ausgebildet ist. Solche Regler, welche eine Positions-, Moment- und Drehzahlregelung umfassen, sind in dem betreffenden technischen Gebiet der Regelung von BLDC-Motoren bekannt. Insbesondere ist gegenständlich vorgesehen, dass ein derartiger Regler Position, Momentbegrenzung und Drehzahlbegrenzung gleichzeitig an eine Steuer- und Kontrolleinheit übergeben.

Insbesondere kann vorgesehen sein, dass die Steuer- und Kontrolleinheit dazu ausgebildet ist eingangsseitig eine Bremswirkungsanforderung zu empfangen, und auf Basis der Bremswirkungsanforderung ein Bremssteuersignal zu generieren und an den Regler 10 des Elektromotors 16 auszugeben.

Die Regelung des Elektromotors kann insbesondere kraftsensorfrei erfolgen, also ohne die Zuhilfenahme zusätzlicher Kraftsensoren.

Die Regelung des Elektromotors kann besonders bevorzugt im Wesentlichen anhand einer Stromaufnahme des Elektromotors 16 erfolgen. Im Wesentlichen anhand einer Stromaufnahme bedeutet in diesem Falle, dass die Regelung vorwiegend anhand der Stromaufnahme des Elektromotors 16 erfolgt, während etwaige andere gemessene Werte lediglich für eine Korrekturfunktion herangezogen werden. Durch die Stromaufnahme des Elektromotors 16 kann dabei auf die Anpresskraft des Spreizkörpers 12 und damit der Bremskraft der Bremsvorrichtung 1 geschlossen werden. Eine derartige Regelung hat den Vorteil, dass diese besonders einfach ist und wenig von zusätzlichen Sensoren abhängig, da die Stromaufnahme des Elektromotors 16 einfach zu messen ist. Ein Nachteil einer derartigen Regelung ist oftmals, dass veränderliche Innenwiderstände der Bremsvorrichtung 1 die Stromaufnahme des Elektromotors 16 zur Erreichung einer bestimmten Position verändern, wodurch aufwendige Korrekturen notwendig wären. Durch den Aufbau mit dem abrollenden Spreizkörper können allerdings die veränderlichen inneren Widerstände gering gehalten werden, wodurch eine derartige Regelung besonders vorteilhaft ist.

Hierbei kann die Steuer- und Kontrolleinheit weiters dazu ausgebildet sein aus wenigstens einem, während einer ersten Bewegung des Spreizkörpers 12 mittels des Elektromotors 16 ermittelten ersten Wert wenigstens eines ersten Betriebsparameters wenigstens eines Teils der Bremsvorrichtung, sowie wenigstens einem, während einer, der ersten Bewegung entgegen gesetzten zweiten Bewegung des Spreizkörpers 12 mittels des Elektromotors 16 ermittelten zweiten Wert des ersten Betriebsparameters des Teils der Bremsvorrichtung 1 wenigstens einen Betriebsverhaltenswert, insbesondere eine Betriebsverhaltenswertemenge, vorzugsweise eine Betriebsverhaltensfunktion, für ein reales Betriebsverhalten der betreffenden Bremsvorrichtung 1 zu ermitteln.

Weiters kann die Steuer- und Kontrolleinheit durch einen Vergleich des wenigstens einen realen Betriebsverhaltenswerts mit wenigstens einer gespeicherten Betriebsverhaltenserwartung wenigstens einen Korrekturfaktor, insbesondere wenigstens eine Korrekturfaktorenmenge, vorzugsweise wenigstens eine Korrekturkurve, ermitteln, und weiters das Bremssteuersignal um den wenigstens einen Korrekturfaktor, insbesondere die Korrekturfaktorenmenge, vorzugsweise die Korrekturkurve, zu korrigieren, und den Regler mit dem korrigierten Bremssteuersignal anzusteuern.

Bevorzugt kann der erste Betriebsparameter eine Stromaufnahme des Elektromotors 16 sein, wobei der erste Wert eine erste Stromaufnahme des Elektromotors 16 ist, und der zweite Wert eine zweite Stromaufnahme des Elektromotors 16 ist.

Insbesondere kann die Steuer- und Kontrolleinheit weiters dazu ausgebildet sein, in wenigstens einem bremswirkungsanforderungsfreien Zeitraum den Elektromotor 16 derart anzusteuern, dass die erste Bewegung und die zweite Bewegung die Reibfläche 6 lediglich innerhalb eines Spalts zwischen Reibfläche 6 und dem Bremskörper 11 erfolgen, also die Reibfläche 6 den Bremskörper 11 nicht kontaktiert. Durch die beiden Bewegungen kann daher im Betrieb die Betriebsverhaltenserwartung laufend ermittelt werden, ohne dass die Funktion der Bremsvorrichtung beeinträchtigt wird.

Weiters kann vorgesehen sein, dass die Bremsenanlage weiters wenigstens einen Bremsentemperatursensor aufweist, welcher mit der Steuer- und Kontrolleinheit verbunden ist, und welcher vorzugsweise im Bereich der wenigstens einen Reibfläche 6, 9 angeordnet ist.

Bevorzugt kann vorgesehen sein, dass der Aktuator, insbesondere der Elektromotor 16, ausgebildet ist, bei den Spreizkörper 12 von der Ausgangsposition 18 in die Endposition 30 zu verbringen. Bei einem Ausfall des Aktuators bleibt die Bremsvorrichtung 1 dadurch in einem ungebremsten Zustand.

Alternativ kann vorgesehen sein, dass der Spreizkörper 12 durch eine Hydraulik oder Pneumatik betätigbar ist.

Alternativ kann vorgesehen sein, dass eine Betätigungsfeder eine Kraft auf die Betätigungsmechanik 15 ausübt, welche in Richtung der Endposition 30 wirkt, und dass der Aktuator, insbesondere der Elektromotor 16 der Betätigungsfeder entgegen wirkt. In diesem Fall bremst die Bremsvorrichtung 1 automatisch bei einem Ausfall des Aktuators.

Weiters kann vorgesehen sein, dass ein zweiter Aktuator mit der Betätigungsmechanik 15 wirkverbunden ist. Dieser zweite Aktuator kann insbesondere eine Parkbremsenaktivierungseinheit sein. Dadurch kann die gleiche Bremsvorrichtung 1 sowohl zum Bremsen eines Fahrzeuges während des Betriebes als auch zum Parken verwendet werden.

Der Betätigungsmechanik 15 kann mit den beiden Aktuatoren derart wirkverbunden sein, dass bei einer Betätigung des zweiten Aktuators der erste Aktuator außer Eingriff gebracht wird. Der zweite Aktuator kann allerdings auch dazu verwendet werden, bei einem Ausfall des Elektromotors 16 die Bremsvorrichtung 1 noch sicher zu betätigen.

Der zweite Aktuator kann insbesondere ein Seilzug sein. Mit einem Seilzug kann eine Parkbremse einfach betätigt werden.

Der zweite Aktuator kann alternativ ein zweiter Elektromotor sein. Der zweite Elektromotor kann insbesondere eine geringere Leistung als der Elektromotor 16 aufweisen.

Besonders bevorzugt kann vorgesehen sein, dass die Betätigungsmechanik 15 eine nichtlineare Übersetzung zwischen einer Drehung des Elektromotors 16 und einer Drehung des Spreizkörpers 12 aufweist. Diese Nichtlinearität ist ein über die Betätigungsbewegung veränderliches Übersetzungsverhältnis. Durch die nichtlineare Übersetzung der Betätigungsmechanik 15 kann das variierende Drehmoment zum Verdrehen des Spreizkörpers 12 im Betriebswinkelbereich ausgeglichen werden. Dieses variierende Drehmoment wird dadurch verursacht, dass in einem Anfangsbereich des Betriebswinkelbereiches der Spreizkörper 12 lediglich die Kraft zur Überwindung des Luftspalts aufbringen muss, während bei einem Kontakt der Reibflächen 6,9 mit dem Bremskörper 11 der Kraftaufwand für eine weitere Verdrehung aufgrund der Anpresskraft erheblich ansteigt. Ein weiterer Vorteil der nichtlinearen Übersetzung der Betätigungsmechanik 15 ist, dass bei der Ausbildung des Spreizkörpers 12 weniger auf die Nichtlinearität der Übersetzung des Spreizkörpers 12 geachtet werden muss, wodurch der Spreizkörpers 12 problemlos bezüglich einer besonders geringe Auslenkung bei der Betätigung quer zur ersten Gerade optimiert werden kann.

Die Betätigungsmechanik 15 kann weiters eine nichtlineare Übersetzung zwischen einer Betätigung des zweiten Aktuators und/oder der Betätigungsfeder und einer Drehung des Spreizkörpers 12 aufweisen.

Die Betätigungsmechanik 15 kann insbesondere derart ausgebildet sein, dass in einem Großteil des Betriebswinkelbereichs ein zur Betätigung der Bremsvorrichtung 1 erforderliches Motordrehmoment des Elektromotors 16 im Wesentlichen konstant ist.

Die nicht-lineare Übersetzung der Betätigungsmechanik 15 ist bevorzugt derart ausgebildet ist, dass die erste Reibfläche 6 zur Überbrückung eines Luftspaltes bis zum Bremskörper 11 mit höherer Geschwindigkeit bewegt wird, als wenn die erste Reibfläche 6 bereits im Rahmen eines Bremsvorganges in Kontakt mit dem Bremskörper 11 ist.

Eine Übersetzung der Betätigungsmechanik 15 kann innerhalb des Betriebswinkelbereichs um einen Faktor von bis zu 1:15, bevorzugt bis zu 1:8, variieren.

Die nichtlineare Übersetzung kann durch eine Abrollung auf Kurven mit nichtkonstanten Krümmungen erfolgen, und/oder über nichtkreisförmige Zahnradsegmente und/oder Zahnräder, und/oder mittels anderer veränderlicher Normalabstände wie Hebel und Gestänge erfolgen.

Besonders bevorzugt kann vorgesehen sein, dass der Spreizkörper 12 mit einem Hebel 33 verbunden ist, insbesondere fest verbunden ist, wobei ein Verschwenken des Hebels 33 den Spreizkörper 12 verdreht.

Bevorzugt kann vorgesehen sein, dass die Betätigungsmechanik 15 ein vom Elektromotor 16 angetriebenes Rad 31 mit einer Steuernocke 32 aufweist, und dass die Steuernocke 32 mit einem Hebel 33 des Spreizkörpers 12 zusammenwirkt. Durch die Anordnung des Rades 31 sowie die Form des Hebels 33 ist die nichtlineare Übersetzung einfach umsetzbar. Eine derartige Ausgestaltung der Betätigungsmechanik 15 ist beispielhaft in Fig. 1 dargestellt.

Alternativ kann bevorzugt vorgesehen sein, dass der Elektromotor 16 eine erste Steuerkurve 34 verdreht, welche erste Steuerkurve 34 mit einer zweiten Steuerkurve 35 am Hebel 33 des Spreizkörpers 12 im Betriebswinkelbereich im Wesentlichen schlupffrei abrollt. Dies ist beispielhaft in Fig. 3 dargestellt, wobei die Drehung der ersten Steuerkurve 34 durch den Elektromotor 16 durch einen Pfeil angedeutet ist. Das schlupffreie Abrollen der beiden Steuerkurven 34, 35 kann durch Reibschluss oder mittels einer Verzahnung erfolgen.

Weiters kann vorgesehen sein, dass der Hebel 33 mittels einer Steuernocke betätigt wird.

Alternativ könnte auch eine Betätigungsmechanik 15 mit einer linearen Übersetzung vorgesehen sein.

Bevorzugt kann vorgesehen sein, dass die Bremsvorrichtung 1 ein Gehäuse aufweist, und dass die Betätigungsmechanik und der Elektromotor 16 innerhalb des Gehäuses angeordnet sind.

Die erste Abrollfläche 14 steht im Wesentlichen orthogonal zu der ersten Gerade. Dadurch bewirkt eine Anpresskraft der ersten Spreizkörperoberfläche 13 parallel zur ersten Gerade zu keiner wesentlichen Kraftkomponente normal zur ersten Gerade. Eine geringfügige Abweichung der ersten Abrollfläche 14 von dieser Ausrichtung ist allerdings möglich, sofern die Haftreibung zwischen der ersten Abrollfläche 14 und der erste Spreizkörperoberfläche 13 ausreichend ist um ein Gleiten zu verhindern. Die erste Abrollfläche 14 kann insbesondere ebene Bereiche und/oder gekrümmte Bereiche aufweisen.

Bevorzugt kann vorgesehen sein, dass an einem Rand der ersten Abrollfläche 14 eine zur ersten Abrollfläche 14 schräg angeordnete Abstützfläche 17 für die erste Spreizkörperoberfläche 13 angeformt ist, wobei die Abstützfläche 17 die erste Spreizkörperoberfläche 13 in einer Ausgangsposition 18 des Spreizkörpers 12 gegen Kräfte quer zur ersten Gerade abstützt. Diese Abstützfläche 17 bewirkt eine zusätzliche Stützung des Spreizkörpers 12 in der Ausgangsposition 18 gegen eine Kraft der Betätigungsmechanik 15 auf den Spreizkörper 12 normal zur ersten Gerade. Dadurch ist eine besonders kompakte Bauform der Betätigungsmechanik 15 möglich, bei welcher wesentliche Kraftkomponenten von der Betätigungsmechanik 15 auch quer zu der ersten Gerade auf den Spreizkörper 12 ausgewirkt werden. Gerade in der Ausgangsposition 18 hat sich oft noch kein ausreichender Druck der ersten Spreizkörperoberfläche 13 auf die erste Abrollfläche 14 aufgebaut, sodass eine entsprechend schräge Krafteinwirkung zu einer Fehlstellung führen könnte. Durch die Abstützfläche 17 wird diese ungewünschte Kraftkomponente abgefangen, bis sich ein ausreichender Druck für eine Haftreibung zwischen der ersten Spreizkörperoberfläche 13 und der ersten Abrollfläche 14 aufgebaut hat. Dies ist beispielhaft in Fig. 1 dargestellt, in welcher eine durch einen Pfeil angedeutete Verdrehung des Rades 31 zu einer, an der ersten Spreizkörperoberfläche 13 durch einen Pfeil dargestellten Kraft auswirken würde. Bei einer Betätigung der Bremsvorrichtung 1 rollt dann die erste Spreizkörperoberfläche 13 von der Abstützfläche 17 weg.

Gemäß einer ersten bevorzugten Ausführungsform kann vorgesehen sein, dass der Spreizkörper 12 an der zweiten Spreizkörperoberfläche 22 in einem, insbesondere als Nadellager ausgebildeten, Wälzlager 23 an jener Betätigungsfläche 7,10 gelagert ist, welche nicht die erste Abrollfläche 14 ist. Dies bedeutet, dass die erste Spreizkörperoberfläche 13 an einer der Betätigungsflächen 7,10 abrollt, welche dann der ersten Abrollfläche 14 entspricht, während die zweite Spreizkörperoberfläche 22 an einer der anderen Betätigungsflächen 7,10 in einem Wälzlager 23 gelagert ist, wodurch sich Relativbewegungen in Richtung der zweiten Geraden ausgleichen lassen. Dadurch ist eine kompakte Bauform möglich. Das Wälzlager 23 kann insbesondere an der ersten Betätigungsfläche 7 angeordnet sein.

Weiters kann bevorzugt vorgesehen sein, dass das Wälzlager 23 zumindest teilzylindermantelförmig ist. Dies bedeutet, dass das Wälzlager 23 zumindest als kreisbogenförmige Lagerschale ausgebildet ist aber auch als komplett umlaufender Kreis ausgebildet sein kann. Dadurch dreht sich der Spreizkörper 12 definiert um eine Drehachse 20, welche mit der Achse des Wälzlagers 23 zusammenfällt. In Fig. 1 und 2 ist ein umlaufendes Wälzlager 23 beispielhaft durch einen einzelnen Wälzkörper angedeutet.

Besonders bevorzugt ist vorgesehen, dass das Wälzlager 23 Teil des Bremssattels 2 ist. Dies führt dazu, dass die Anordnung der Drehachse 20 des Spreizkörpers 12 zu dem Bremssattel 2 lagefest ist. Dies ermöglicht eine besonders einfache und wenig fehlerbehaftete Verdrehung des Spreizkörpers durch einen am Bremssattel 2 angeordneten Elektromotor 16.

Gemäß einer zweiten bevorzugten Ausführungsform kann vorgesehen sein, dass bei der zur Betätigung der Bremsvorrichtung 1 erfolgenden Drehung des Spreizkörpers 12 eine zweite Spreizkörperoberfläche 22 mit einer zweiten Abrollfläche 24 unmittelbar in Kontakt ist und auf der zweiten Abrollfläche 24 im Wesentlichen abrollt, und dass die zweite Abrollfläche 24 jener Betätigungsfläche 7,10 entspricht, welche nicht die erste Abrollfläche 14 ist. Dies bedeutet, dass beide Spreizkörperoberflächen 13,22 an jeweils einer der beiden Betätigungsflächen 7,10 im Wesentlichen abrollen. Dadurch ist kein Wälzlager 23 mit den entsprechenden Nachteilen mehr erforderlich, wodurch die Bremsvorrichtung besonders einfach ausgebildet sein kann und auch die Betätigungswiderstände verringert sind. Die Verdrehung der beiden Spreizkörperoberflächen 13,22 erfolgt allerdings dabei gegenüber einer gemeinsamen Drehachse 20, welche weder zu dem Bremssattel 2 noch zu dem Andrückteil 8 lagefest ist. Die Drehachse 20 kann im Wesentlichen zwischen der ersten Spreizkörperoberfläche 13 und der zweiten Spreizkörperoberfläche 22 angeordnet sein. Die im Folgenden beschriebenen Eigenschaften der ersten Spreizkörperoberfläche 13 können analog auch auf die zweite Spreizkörperoberfläche 22 angewandt werden.

Das Profil des Spreizkörpers 12 kann hier in der Drehebene des Spreizkörpers 12 betrachtet insbesondere im Wesentlichen Z-förmig ausgebildet sein, wobei die erste Spreizkörperoberfläche 13 und die zweite Spreizkörperoberfläche 22 an den gegenüberliegenden Enden der Z-Form angeordnet sind und in eine entgegengesetzte Richtung weisen.

Bevorzugt kann vorgesehen sein, dass der Spreizkörper 12 bei seiner Drehachse 20 eine Führung 25 aufweist, und dass die Führung 25 die Drehachse 20 des Spreizkörpers 12 zumindest in einem Anfangsbereich des zur Betätigung der Bremsvorrichtung 1 erfolgenden Drehung des Spreizkörpers 12 gegen den Bremssattel 2 gegenüber Kräften quer zur ersten Gerade abstützt. Die Führung 25 kann insbesondere in einem, im Wesentlichen parallel zur ersten Gerade verlaufenden Langloch 36 im Bremssattel 2 angeordnet sein. Die Führung 25 hat analog zur Abstützfläche 17 die Aufgabe eine unkontrollierte Bewegung des Spreizkörpers 12 besonders im Anfangsbereich zu unterbinden.

Insbesondere kann vorgesehen sein, dass die Führung 25, insbesondere im Langloch 36, ebenfalls eine im Wesentlichen abrollende Bewegung macht. Hierfür kann die Führung 25 und/oder das Langloch 36 entsprechend geeigneten Abrollkurven geformt sein.

Insbesondere kann die Führung 25 derart ausgebildet sein, dass lediglich in dem Anfangsbereich des Betriebswinkelbereiches die Stützung durch die Führung erfolgt. Der Anfangsbereich kann hierbei insbesondere maximal die ersten von der Ausgangsposition 18 ausgehenden 25% des Betriebswinkelbereiches überstreichen. Außerhalb des Anfangsbereiches ist die Lage des Spreizkörpers 12 durch die Haftreibung zwischen der wenigstens einen Spreizkörperoberfläche 13,22 und der wenigstens einen Abrollfläche 14,24 bereits ausreichend definiert, wodurch durch die Führung 25 eine kinematische Überdefinierung erfolgen würde. Konstruktiv kann dies durch eine Aufweitung des Langloches 36 oder durch die Ausbildung der Führung 25 als offene Nut erreicht werden.

Alternativ kann vorgesehen sein, dass die Abstützung durch die Führung 25 im Wesentlichen im gesamten Betriebswinkelbereich erfolgt.

Es kann insbesondere vorgesehen sein, dass die zweite Spreizkörperoberfläche 22 näher zu der Drehachse 20 angeordnet ist als die erste Spreizkörperoberfläche 13. Dadurch fällt ein durch die Führung 25 auszugleichender Fehler 37 der Drehachse 20 zu dem Bremssattel 2 geringer aus.

Bevorzugt ist bei einer Verdrehung des Spreizkörpers 12 über den gesamten Betriebswinkelbereich ein Fehler 37 orthogonal zu der ersten Gerade, also parallel zu der zweiten Geraden, kleiner als 15 %, bevorzugt kleiner als 10%, besonders bevorzugt kleiner als 7%, als die Auslenkung 38 der beiden Betätigungsflächen 7,10 parallel zu der ersten Gerade. Der Fehler 37 bezeichnet hierbei die Auslenkung der beiden Betätigungsflächen 7,10 parallel zu der zweiten Geraden bei einer idealen Abrollbewegung der wenigstens einen Spreizkörperoberfläche 13,22 an der wenigstens einen Abrollfläche 14,24. Dieser geringe Fehler 37 kann selbst bei einer genauen Bauweise der Bremsvorrichtung 1 durch einen Schlupf zwischen der wenigstens einen Spreizkörperoberfläche 13,22 und der wenigstens einen Abrollfläche 14,24 beziehungsweise durch Lagertoleranzen des Andruckteils 8 zu dem Bremssattel 2 ausgeglichen werden.

Besonders bevorzugt kann vorgesehen sein, dass die erste Abrollfläche 14 eine Ebene normal zu der ersten Gerade aufspannt, und dass der Spreizkörper 12, das Andrückteil 8 und der Bremssattel 2 derart zueinander angeordnet sind, dass die Drehachse 20 des Spreizkörpers 12 in der Ausgangsposition 18 und die Drehachse 20 des Spreizkörpers 12 in der Endposition 30 an jeweils gegenüberliegenden Seiten der Ebene der Abrollfläche 14 angeordnet sind. Das bedeutet, dass die Drehachse 20 des Spreizkörpers 12 bei einer Verdrehung durch den gesamten Betriebswinkelbereich des Spreizkörpers 12 die durch die erste Abrollfläche 14 aufgespannte Ebene durchwandert.

Besonders bevorzugt kann vorgesehen sein, dass ein Verhältnis eines ersten Normalabstandes der Drehachse 20 des Spreizkörpers 12 in der Ausgangsposition 18 zu der Ebene der ersten Abrollfläche 14 und eines zweiten Normalabstandes der Drehachse 20 des Spreizkörpers 12 in der Endposition 30 zu der Ebene der ersten Abrollfläche 14 zwischen 0,5 und 2, bevorzugt zwischen 0,7 und 1,5, besonders bevorzugt im Wesentlichen 1, beträgt. Dies bedeutet, dass die Ebene der ersten Abrollfläche 14 im Wesentlichen mittig zwischen der Ausgangsposition 18 und der Endposition 30 der Drehachse 20 des Spreizkörpers 12 angeordnet ist. Durch diesen Zusammenhang kann ein besonders geringer Fehler 37 erreicht werden.

Erfindungsgemäß bildet ein Profil der ersten Spreizkörperoberfläche 13 eine erste Abrollkurve aus, die erste Abrollkurve weist wenigstens einen Krümmungsmittelpunkt 19 auf, und bei zumindest einem Großteil der zur Betätigung der Bremsvorrichtung 1 erfolgenden Drehung des Spreizkörpers 12 ist die Drehachse 20 des Spreizkörpers 12 von einem Berührungspunkt 21 der ersten Abrollkurve in Richtung der ersten Gerade betrachtet vor dem Krümmungsmittelpunkt 19 des Berührungspunktes 21 angeordnet. Dies bedeutet, dass in der Richtung von der ersten Abrollfläche 14 zu der ersten Spreizkörperoberfläche 13 betrachtet die Drehachse 20 in einem Großteil der zur Betätigung der Bremsvorrichtung 1 erfolgenden Drehung, insbesondere mindestens 80% des Betriebswinkelbereiches, bevorzugt im gesamten Betriebswinkelbereich, vor den Krümmungsmittelpunkten 19 der einzelnen Berührungspunkte 21, also der Evolute der Abrollkurve, liegt. Dies hat den Effekt, dass im Wesentlichen bei jeder infinitesimalen Drehung des Spreizkörpers 12 von der Ausgangsposition 18 in Richtung der Endposition 30 eine Vergrößerung der Projektion der Verbindungslinie zwischen dem aktuellen Krümmungsmittelpunkt 19 und der Drehachse 20 in Richtung der ersten Gerade durch ein entsprechendes Abrollen der Abrollkurve an der Abrollfläche 14,24 entgegengewirkt wird. Die zweite Spreizkörperoberfläche 22 kann eine zweite Abrollkurve mit gleichen Eigenschaften aufweisen.

Insbesondere kann in einem Großteil der zur Betätigung der Bremsvorrichtung 1 erfolgenden Drehung der Abstand der Drehachse 20 zu dem Krümmungsmittelpunkt 19 des jeweiligen Berührungspunktes 21 größer sein als der Krümmungsradius des Krümmungskreises des jeweiligen Berührungspunktes 21.

Weiters kann vorgesehen sein, dass in einem Großteil der zur Betätigung der Bremsvorrichtung 1 erfolgenden Drehung der Abstand der Drehachse 20 zu dem Krümmungsmittelpunkt 19 des jeweiligen Berührungspunktes 21 kleiner ist als ein Zehnfaches, insbesondere ein Fünffaches, besonders bevorzugt ein Dreifaches, des Krümmungsradius des Krümmungskreises des jeweiligen Berührungspunktes 21. Bevorzugt kann vorgesehen sein, dass die erste Abrollkurve im Wesentlichen ein Kreisbogen ist. Ebenfalls kann die zweite Abrollkurve im Wesentlichen ein Kreisbogen sein. Durch die Kreisbogenform ergibt sich eine mathematisch leicht erfassbare und konstruktiv leicht umsetzbare Kinematik zwischen dem Spreizkörper 12 und den Betätigungsflächen 7,10. Im Falle eines Kreisbogens als Abrollkurve entspricht der Krümmungsmittelpunkt 19 dem Kreisbogenmittelpunkt, wobei sich die Lage der Drehachse 20 bei einem Abrollen der Abrollkurve an einer ebenen ersten Abrollfläche 14 mathematisch als Zykloide 39, insbesondere als verlängerte Zykloide 39, darstellen lässt.

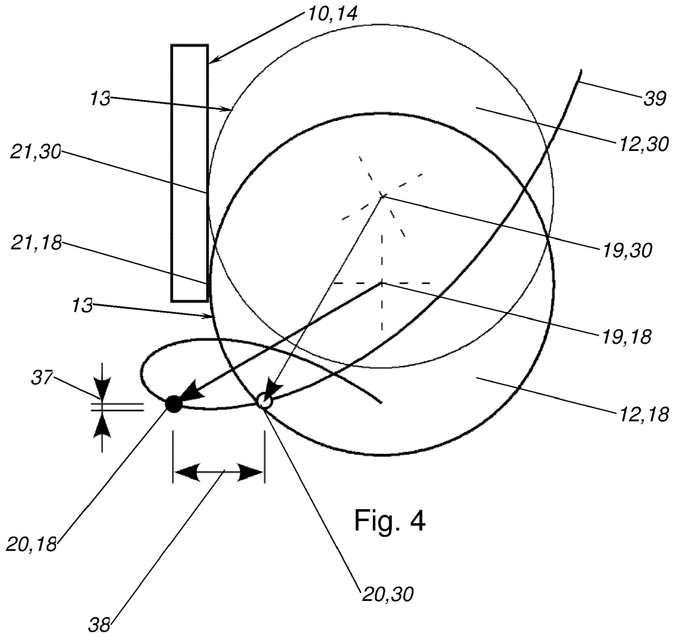

In Fig. 4 ist beispielhaft für diese Randbedingungen der Verlauf der Zykloide 39 bei einer gedacht lagefesten ersten Abrollfläche 14 dargestellt, wobei die Abrollkurve der ersten Spreizkörperoberfläche 13 sowohl in der Ausgangsposition 18 als auch in der Endposition 30 eingezeichnet ist. Von der Ausgangsposition 18 zu der Endposition 30 bewegt sich die Drehachse 20 entlang der Zykloide zwischen diesen Punkten. Wie in Fig. 4 gut erkennbar ist, ergibt sich in einem gewissen Winkelbereich eine große Auslenkung 38 entlang der ersten Gerade, bei einem gleichzeitig minimalen Fehler 37 parallel zur zweiten Geraden. Durch eine simple Ausnutzung dieses Zusammenhanges lässt sich die Bremsvorrichtung 1 derart ausbilden, dass alleine durch das Abrollen der erstem Spreizkörperoberfläche 13 an der ersten Abrollfläche 14, und gegebenenfalls das Abrollen der zweiten Spreizkörperoberfläche 22 an der zweiten Abrollfläche 24, das Andrückteil 9 gegenüber dem Bremssattel 2 ohne weitere Ausgleichseinrichtungen und bei geringem Spiel linear geführt werden kann. Es versteht sich, dass dieser Zusammenhang nicht auf die Form des Kreisbogens als Abrollkurve beschränkt ist, sondern diese der einfach verständlichen Darstellung dient. Durch eine nummerische Optimierung der Abrollkurve kann beispielsweise der Fehler 37 weiter verringert werden.

Weiters kann vorgesehen sein, dass sich bei einer zur Betätigung der Bremsvorrichtung 1 erfolgenden Drehung des Spreizkörpers 12 ein normal zur ersten Gerade gemessener Abstand zwischen einem Mittelpunkt der ersten Spreizkörperoberfläche 13 und einem Mittelpunkt der zweiten Spreizkörperoberfläche 22 stetig vergrößert. Der Mittelpunkt kann hierbei dem jeweiligen Krümmungsmittelpunkt entsprechen.

Es kann vorgesehen sein, dass die Spreizkörperoberflächen 13,22 und die Betätigungsflächen 7,10 in einer Ebene normal zur Drehachse 20 des Spreizkörpers 12 angeordnet sind.

Bevorzugt kann aber vorgesehen sein, dass die Spreizkörperoberflächen 13,22 und die Betätigungsflächen 7,10 entlang der Drehachse 20 betrachtet so aufgeteilt sind, dass die Drehachse 20 des Spreizkörpers frei von Kippmomenten ist. Dadurch kann eine besonders kompakte Bauweise der Bremsvorrichtung 1 erreicht werden.

Bevorzugt kann vorgesehen sein, dass die Bremsvorrichtung 1 einen Verschleißnachsteller 26 aufweist. Ein Verschleißnachsteller 26 ist ein Bauteil, welches einen ständig erfolgenden Verschleiß der Bremsbeläge an den Reibflächen 6,9 ausgleicht.

Bevorzugt kann vorgesehen sein, dass das Andrückteil 8 den Verschleißnachsteller 26 aufweist, und dass die erste Betätigungsfläche 7 zweigeteilt und beidseitig von dem Verschleißnachsteller 26 angeordnet ist. Da der Verschleißnachsteller 26 ein Bauteil mit einer gewissen Höhe ist, kann dadurch leicht die Bremsvorrichtung 1 an den begrenzt vorhandenen Einbauraum bei einem PKW angepasst werden.

Wie in Fig. 2 ersichtlich kann bevorzugt vorgesehen sein, dass der Spreizkörper 12 an zwei Wälzlagern 23 gelagert ist, welche ebenfalls beidseitig vom Verschleißnachsteller 26 angeordnet sind.

Bevorzugt kann vorgesehen sein, dass die Bremsvorrichtung 1 eine Führungsaufnahme 27 zur Verbindung mit einem Lagerbauteil 4 unter Ausbildung einer in Richtung einer ersten Gerade verschiebbaren Lagerung der Bremsvorrichtung 1 aufweist. Hierbei kann das Lagerbauteil 28 Teil des restlichen Radlagers sein, auf welchem die Bremsvorrichtung 1 am Lager 27 aufgesteckt ist. Das Lagerbauteil 28 ist am Bremskörper 11 derart gelagert, dass die relative Position des Bremskörpers 11 zu dem Lagerbauteil 28 parallel zur ersten Gerade betrachtet konstant ist. Das Lagerbauteil 28 kann insbesondere drehbar zum Bremskörper 11 gelagert sein.

Weiters kann eine Bremsenanordnung umfassend die Bremsvorrichtung 1, den Bremskörper 11 und das Lagerbauteil 28 vorgesehen sein, wobei die Bremsvorrichtung 1 in Richtung der ersten Gerade verschiebbar am Lagerbauteil 28 gelagert ist. Hierbei kann das Lagerbauteil 28 eine in Richtung der ersten Gerade verlaufende Führungsstange aufweisen, wobei ein Teil der Führungsstange innerhalb der Führungsaufnahme 27 angeordnet ist, sodass die Bremsvorrichtung 1 auf der Führungsstange in Richtung der ersten Gerade verschoben werden kann. Die Führungsstange kann ein freies Ende aufweisen, über welches die Bremsvorrichtung 1 aufgesteckt werden kann. Das Lagerbauteil 28 ist am Bremskörper 11 derart gelagert, dass die relative Position des Bremskörpers 11 zu dem Lagerbauteil 4 parallel zur ersten Gerade betrachtet konstant ist. Das Lagerbauteil 28 kann insbesondere drehbar zum Bremskörper 11 gelagert sein.

Bevorzugt kann vorgesehen sein, dass wenigstens eine Rückstellfeder vorgesehen ist, wobei eine Federkraft der Rückstellfeder eine Auseinanderbewegung der beiden Reibflächen bewirkt. Dies bedeutet, dass bei einem Rückführen des Spreizkörpers 12 nach einer Bremsbetätigung in die Ausgangsposition 18 die Rückstellfeder auch das Andrückteil 8 relativ zu dem Bremssattel 2 in eine Ausgangsstellung rückführt. Dadurch kann ein Schleifen der Reibflächen 6,9 am Bremskörper 11 bei einer gelösten Bremsvorrichtung 1 vermieden werden.

Besonders bevorzugt kann vorgesehen sein, dass ein mit dem Spreizkörper 12 gekoppeltes Bewegungsdämpfungsteil 29 zum Dämpfen einer Translationsbewegung des Spreizkörpers 12 gegenüber dem Lagerbauteil 28 in der Führungsaufnahme 27 parallel zur ersten Gerade ausgebildet ist. Das Bewegungsdämpfungsteil 29 kann insbesondere parallel zur ersten Gerade betrachtet lagefest zur Drehachse 20 des Spreizkörpers 12 gehalten sein. Vor allem bei einem Abrollen des Spreizkörpers 12 an beiden Betätigungsflächen 7,10 erfolgt von der Drehachse 20 des Spreizkörpers 12 aus betrachtet eine beidseitige Betätigung der beiden Betätigungsflächen 7,10. Der Spreizkörper 12, und insbesondere die Drehachse 20 des Spreizkörpers 12, definiert daher einen Punkt oder Bereich, relativ zu welchem die beiden Reibflächen 6,9 beidseitig bewegt werden. Das Bewegungsdämpfungsteil 29 hat die Wirkung eine Relativbewegung des Spreizkörpers 12 zu dem Lagerbauteil 28 stärker zu dämpfen als die Relativbewegungen des Bremssattels 2 und des Andrückteils 8 relativ zu dem Lagerbauteil 28. Dadurch werden beide Reibflächen 6,9 bei der Betätigung der Bremsvorrichtung 1 beidseitig zu dem Bremskörper 11 zugeführt und nach dem Lösen der Bremsvorrichtung 1 wieder vom Bremskörper 11 abgehoben. Sobald eine der beiden Reibflächen 6,9 mit dem Bremskörper 11 in Kontakt ist, ist die Anpresskraft höher als die Widerstandskraft des Bewegungsdämpfungsteils 29, wodurch sich der Spreizkörpers 12 bei jedem Bremsvorgang bezüglich des Bremskörpers 11 neu zentrieren kann.

Bevorzugt kann vorgesehen sein, dass die Führungsaufnahme 27 ein Teil des Bremssattels 2 ist, und dass das Bewegungsdämpfungsteil 29 ein in Richtung der ersten Gerade beweglich in der Führungsaufnahme 27 gelagerter Stift 40 ist, welcher eine Reibkraft auf das Lagerbauteil 28 auswirkt. Der Stift 40 ist in Richtung der ersten Gerade mit der Position der Drehachse 20 des Spreizkörpers 12 mechanisch gekoppelt, sodass die Position der Drehachse 20 des Spreizkörpers 12 dem Stift 40 folgt. Diese Kopplung zwischen der Drehachse 20 des Spreizkörpers 12 mit dem Stift 40 ist in Fig. 3 mit einer Verbindungslinie angedeutet. Im Falle einer Betätigung der Bremsvorrichtung 1 ist der Stift 40 im Wesentlichen lagefest zu dem Lagerbauteil 28, während sich der Bremssattel 2 und das Andrückteil 8 relativ zum Stift 40 und zum Lagerbauteil 28 bewegen.

Alternativ kann vorgesehen sein, dass das Bewegungsdämpfungsteil 29 einen Befestigungsbauteil aufweist, dass die Führungsaufnahme 3 Teil des Befestigungsbauteil ist, und dass der Bremssattel 2 und das Andrückteil 8 im Wesentlichen entlang der ersten Gerade linear am Befestigungsbauteil geführt sind. Das Bewegungsdämpfungsteil 29 bildet daher einen dritten Bauteil der Bremsvorrichtung 1 aus, über welchen die Bremsvorrichtung 1 am Lagerbauteil 28 gelagert ist und an welchem der Bremssattel 2 und das Andrückteil 8 gelagert sind. Dadurch wir auf einfache Weise die Bewegung des Bremssattels 2 und des Andrückteils 8 von dem Lagerbauteil 28 entkoppelt, da sich der Bremssattel 2 und das Andrückteil 8 am Bewegungsdämpfungsteil 5 gelagert sind.

## Patentansprüche

1. Bremsvorrichtung (1) umfassend einen Bremssattel (2) mit einem ersten Schenkel (3), einem zweiten Schenkel (4) und einem, den ersten Schenkel (3) mit dem zweiten Schenkel (4) verbindenden Verbindungsabschnitt (5), wobei an einer ersten Innenseite des ersten Schenkels (3) eine erste Reibfläche (6) angeordnet ist, und an einer zweiten Innenseite des zweiten Schenkels (4) eine erste Betätigungsfläche (7) angeordnet ist, wobei am Bremssattel (2) ein Andrückteil (8) der Bremsvorrichtung (1) entlang einer ersten Geraden linear geführt ist, wobei das Andrückteil (8) eine, der ersten Reibfläche (6) zugewandte zweite Reibfläche (9), sowie eine, der zweiten Reibfläche (9) abgewandte zweite Betätigungsfläche (10) aufweist, wobei ein Bereich zwischen der ersten Reibfläche (6) und der zweiten Reibfläche (9) zur Anordnung eines Bremskörpers (11) vorgesehen ist, wobei die Bremsvorrichtung (1) einen mit der ersten Betätigungsfläche (7) und der zweiten Betätigungsfläche (10) zusammenwirkenden drehbaren Spreizkörper (12) aufweist, wobei bei einer zur Betätigung der Bremsvorrichtung (1) erfolgenden Drehung des Spreizkörpers (12) eine erste Spreizkörperoberfläche (13) mit einer ersten Abrollfläche (14) unmittelbar in Kontakt ist und auf der ersten Abrollfläche (14) im Wesentlichen abrollt, wobei die erste Abrollfläche (14) der ersten Betätigungsfläche (7) oder der zweiten Betätigungsfläche (10) entspricht, **dadurch gekennzeichnet, dass** ein Profil der ersten Spreizkörperoberfläche (13) eine erste Abrollkurve ausbildet, dass die erste Abrollkurve wenigstens einen Krümmungsmittelpunkt (19) aufweist, und dass bei zumindest einem Großteil der zur Betätigung der Bremsvorrichtung (1) erfolgenden Drehung des Spreizkörpers (12) eine Drehachse (20) des Spreizkörpers (12) von einem Berührungspunkt (21) der ersten Abrollkurve in Richtung der ersten Geraden betrachtet vor dem Krümmungsmittelpunkt (19) des Berührungspunktes (21) angeordnet ist.

2. Bremsvorrichtung (1) nach Anspruch 1, **dadurch gekennzeichnet, dass** zum Verdrehen des Spreizkörpers (12) der Spreizkörper (12) über eine Betätigungsmechanik (15) mit einem Elektromotor (16) wirkverbunden ist.

3. Bremsvorrichtung (1) nach Anspruch 2, **dadurch gekennzeichnet, dass** die Betätigungsmechanik (15) eine nichtlineare Übersetzung zwischen einer Drehung des Elektromotors (16) und einer Drehung des Spreizkörpers (12) aufweist.

4. Bremsvorrichtung (1) nach einem der Ansprüche 1 bis 3, **dadurch gekennzeichnet, dass** an einem Rand der ersten Abrollfläche (14) eine zur ersten Abrollfläche (14) schräg angeordnete Abstützfläche (17) für die erste Spreizkörperoberfläche (13) angeformt ist, wobei die Abstützfläche (17) die erste Spreizkörperoberfläche (13) in einer Ausgangsposition (18) des Spreizkörpers (12) gegen Kräfte quer zur ersten Geraden abstützt.

5. Bremsvorrichtung (1) nach einem der Ansprüche 1 bis 4, **dadurch gekennzeichnet, dass** die erste Abrollkurve im Wesentlichen ein Kreisbogen ist.

6. Bremsvorrichtung (1) nach einem der Ansprüche 1 bis 5, **dadurch gekennzeichnet, dass** der Spreizkörper (12) an einer zweiten Spreizkörperoberfläche (22) in einem, insbesondere als Nadellager ausgebildeten, Wälzlager (23) an jener Betätigungsfläche (7,10) gelagert ist, welche nicht die erste Abrollfläche (14) ist.

7. Bremsvorrichtung (1) nach Anspruch 6, **dadurch gekennzeichnet, dass** das Wälzlager (23) zumindest teilzylindermantelförmig ist.

8. Bremsvorrichtung (1) nach einem der Ansprüche 1 bis 7, **dadurch gekennzeichnet, dass** bei der zur Betätigung der Bremsvorrichtung (1) erfolgenden Drehung des Spreizkörpers (12) eine zweite Spreizkörperoberfläche (22) mit einer zweiten Abrollfläche (24) unmittelbar in Kontakt ist und auf der zweiten Abrollfläche (24) im Wesentlichen abrollt, und dass die zweite Abrollfläche (24) jener Betätigungsfläche (7,10) entspricht, welche nicht die erste Abrollfläche (14) ist.

9. Bremsvorrichtung (1) nach einem der Ansprüche 1 bis 8, **dadurch gekennzeichnet, dass** der Spreizkörper (12) bei seiner Drehachse (20) eine Führung (25) aufweist, und dass die Führung (25) die Drehachse (20) des Spreizkörpers (12) zumindest in einem Anfangsbereich des zur Betätigung der Bremsvorrichtung (1) erfolgenden Drehung des Spreizkörpers (12) gegen den Bremssattel (2) gegenüber Kräften quer zur ersten Gerade abstützt.

10. Bremsvorrichtung (1) nach einem der Ansprüche 1 bis 9, **dadurch gekennzeichnet, dass** das Andrückteil (8) einen Verschleißnachsteller (26) aufweist, und dass die erste Betätigungsfläche (7) zweigeteilt und beidseitig von dem Verschleißnachsteller (26) angeordnet ist.

11. Bremsvorrichtung (1) nach einem der Ansprüche 1 bis 10, **dadurch gekennzeichnet, dass** die Bremsvorrichtung (1) eine Führungsaufnahme (27) zur Verbindung mit einem Lagerbauteil (4) unter Ausbildung einer in Richtung einer ersten Gerade verschiebbaren Lagerung der Bremsvorrichtung (1) aufweist.

12. Bremsvorrichtung (1) nach Anspruch 11, **dadurch gekennzeichnet, dass** ein mit dem Spreizkörper (12) gekoppeltes Bewegungsdämpfungsteil (29) zum Dämpfen einer Translationsbewegung des Spreizkörpers (12) gegenüber dem Lagerbauteil (28) in der Führungsaufnahme (27) parallel zur ersten Gerade ausgebildet ist.

13. Radlager umfassend eine Bremsscheibe als Bremskörper (11) und eine Bremsvorrichtung (1) nach einem der Ansprüche 1 bis 12, **dadurch gekennzeichnet, dass** eine Drehachse der Bremsscheibe parallel zur ersten Gerade verläuft.

14. Fahrzeug umfassend wenigstens ein Radlager nach Anspruch 13.

## Claims

1. Brake device (1) comprising a brake caliper (2) with a first leg (3), a second leg (4) and a connecting section (5) connecting the first leg (3) to the second leg (4), wherein a first frictional surface (6) is arranged on a first inner side of the first leg (3) and a first actuation surface (7) being arranged on a second inner side of the second leg (4), wherein a pressing part (8) of the brake device (1) being guided linearly along a first straight line on the brake caliper (2), wherein the pressing part (8) has a second frictional surface (9) facing the first frictional surface (6) and a second actuation surface (10) facing away from the second frictional surface (9), wherein a region between the first frictional surface (6) and the second frictional surface (9) is provided for the arrangement of a brake element (11), wherein the brake device (1) has a rotatable spreading element (12) cooperating with the first actuation surface (7) and the second actuation surface (10), wherein a first spreading element surface (13) being in direct contact with a first rolling surface (14) during a rotation of the spreading element (12) for actuating the brake device (1) and rolling substantially on the first rolling surface (14), wherein the first rolling surface (14) corresponding to the first actuation surface (7) or the second actuation surface (10), **characterised in that** a profile of the first spreading element surface (13) forms a first rolling curve, **in that** the first rolling curve has at least one centre of curvature (19), and **in that**, during at least a large part of the rotation of the spreading element (12) which takes place in order to actuate the brake device (1), an axis of rotation (20) of the spreading element (12) is arranged in front of the centre of curvature (19) of the point of contact (21), as viewed from a point of contact (21) of the first rolling curve in the direction of the first straight line.

2. Brake device (1) according to claim 1, **characterised in that,** in order to rotate the spreading element (12), the spreading element (12) is operatively connected to an electric motor (16) via an actuation mechanism (15).

3. Brake device (1) according to claim 2, **characterised in that** the actuation mechanism (15) has a non-linear transmission between a rotation of the electric motor (16) and a rotation of the spreading element (12).

4. Brake device (1) according to one of claims 1 to 3, **characterized in that** a support surface (17) for the first spreading element surface (13) is integrally formed on an edge of the first rolling surface (14) and is arranged obliquely to the first rolling surface (14), wherein the support surface (17) supporting the first spreading element surface (13) in an initial position (18) of the spreading element (12) against forces transverse to the first straight line.

5. Brake device (1) according to any one of claims 1 to 4, **characterised in that** the first rolling curve is substantially an arc of a circle.

6. Brake device (1) according to one of the claims 1 to 5, **characterised in that** the spreading element (12) is mounted on a second spreading element surface (22) in a roller bearing (23), in particular in the form of a needle bearing, on that actuation surface (7, 10) which is not the first actuation surface (14).

7. Brake device (1) according to claim 6, **characterised in that** the roller bearing (23) is at least partially cylindrical.

8. Brake device (1) according to one of the claims 1 to 7, **characterised in that** during the rotation of the spreading element (12) for actuating the brake device (1), a second spreading element surface (22) is in direct contact with a second rolling surface (24) and rolls substantially on the second rolling surface (24), and **in that** the second rolling surface (24) corresponds to that actuating surface (7, 10) which is not the first rolling surface (14).

9. Brake device (1) according to one of claims 1 to 8, **characterised in that** the spreading element (12) has a guide (25) at its axis of rotation (20), and **in that** the guide (25) supports the axis of rotation (20) of the spreading element (12) against forces transverse to the first straight line at least in an initial region of the rotation of the spreading element (12) against the brake caliper (2) which takes place in order to actuate the brake device (1).

10. Brake device (1) according to one of claims 1 to 9, **characterised in that** the pressing part (8) has a wear adjuster (26), and **in that** the first actuation surface (7) is divided in two and arranged on both sides of the wear adjuster (26).

11. Brake device (1) according to one of the claims 1 to 10, **characterised in that** the brake device (1) has a guide receiving area (27) for connection to a bearing component (4), forming a bearing of the brake device (1) displaceable in the direction of a first straight line.

12. Brake device (1) according to claim 11, **characterised in that** a movement damping part (29) coupled to the spreading element (12) for damping a translational movement of the spreading element (12) relative to the bearing component (28) is formed in the guide receiving area (27) parallel to the first straight line.

13. Wheel bearing comprising a brake disc as brake element (11) and a brake device (1) according to one of the claims 1 to 12, **characterised in that** an axis of rotation of the brake disc runs parallel to the first straight line.

14. Vehicle comprising at least one wheel bearing according to claim 13.

## Revendications

1. Dispositif de freinage (1) comprenant un étrier de frein (2) avec une première branche (3), une deuxième branche (4) et une section de liaison (5) reliant la première branche (3) à la deuxième branche (4), une première surface de friction (6) étant disposée sur un premier côté intérieur de la première branche (3), et une première surface d'actionnement (7) est disposée sur un deuxième côté intérieur de la deuxième branche (4), une pièce de pression (8) du dispositif de freinage (1) étant guidée linéairement le long d'une première ligne droite sur l'étrier de frein (2), la pièce de pression (8) présentant une deuxième surface de friction (9) tournée vers la première surface de friction (6), ainsi qu'une deuxième surface d'actionnement (10) opposée à la deuxième surface de friction (9), une zone entre la première surface de friction (6) et la deuxième surface de friction (9) étant prévue pour l'agencement d'un corps de freinage (11), le dispositif de freinage (1) présentant un corps d'écartement (12) rotatif coopérant avec la première surface d'actionnement (7) et la deuxième surface d'actionnement (10), dans lequel, lors d'une rotation du corps d'écartement (12) effectuée pour actionner le dispositif de freinage (1), une première surface de corps d'écartement (13) est directement en contact avec une première surface de roulement (14) et roule essentiellement sur la première surface de roulement (14), la première surface de roulement (14) correspondant à la première surface d'actionnement (7) ou à la deuxième surface d'actionnement (10), **caractérisé en ce qu'**un profil de la première surface de corps d'écartement (13) forme une première courbe de roulement, **en ce que** la première courbe de déroulement présente au moins un centre de courbure (19), et **en ce que**, pour au moins une grande partie de la rotation du corps d'écartement (12) effectuée pour l'actionnement du dispositif de freinage (1), un axe de rotation (20) du corps d'écartement (12), vu depuis un point de contact (21) de la première courbe de déroulement dans la direction de la première droite, est disposé devant le centre de courbure (19) du point de contact (21).

2. Dispositif de freinage (1) selon la revendication 1, **caractérisé en ce que**, pour faire tourner le corps d'écartement (12), le corps d'écartement (12) est relié fonctionnellement à un moteur électrique (16) par un mécanisme d'actionnement (15).

3. Dispositif de freinage (1) selon la revendication 2, **caractérisé en ce que** le mécanisme d'actionnement (15) présente une transmission non linéaire entre une rotation du moteur électrique (16) et une rotation du corps d'écartement (12).

4. Dispositif de freinage (1) selon l'une des revendications 1 à 3, **caractérisé en ce que** sur un bord de la première surface de roulement (14) est formée une surface d'appui (17) pour la première surface de corps d'écartement (13), disposée obliquement par rapport à la première surface de roulement (14), la surface d'appui (17) soutenant la première surface de corps d'écartement (13) dans une position initiale (18) du corps d'écartement (12) contre des forces transversales à la première droite.

5. Dispositif de freinage (1) selon l'une des revendications 1 à 4, **caractérisé en ce que** la première courbe de roulement est sensiblement un arc de cercle.

6. Dispositif de freinage (1) selon l'une des revendications 1 à 5, **caractérisé en ce que** le corps d'écartement (12) est monté sur une deuxième surface (22) du corps d'écartement dans un palier à roulement (23), en particulier sous forme de roulement à aiguilles, sur la surface d'actionnement (7, 10) qui n'est pas la première surface de roulement (14).

7. Dispositif de freinage (1) selon la revendication 6, **caractérisé en ce que** le palier à roulement (23) est au moins en forme d'enveloppe cylindrique partielle.

8. Dispositif de freinage (1) selon l'une des revendications 1 à 7, **caractérisé en ce que**, lors de la rotation du corps d'écartement (12) effectuée pour actionner le dispositif de freinage (1), une deuxième surface (22) du corps d'écartement est directement en contact avec une deuxième surface de roulement (24) et roule sensiblement sur la deuxième surface de roulement (24), et **en ce que** la deuxième surface de roulement (24) correspond à la surface d'actionnement (7, 10) qui n'est pas la première surface de roulement (14).

9. Dispositif de freinage (1) selon l'une des revendications 1 à 8, **caractérisé en ce que** le corps d'écartement (12) présente un guidage (25) au niveau de son axe de rotation (20), et **en ce que** le guidage (25) soutient l'axe de rotation (20) du corps d'écartement (12) au moins dans une zone initiale de la rotation du corps d'écartement (12) contre l'étrier de frein (2) qui a lieu pour actionner le dispositif de freinage (1), par rapport à des forces transversales à la première droite.

10. Dispositif de freinage (1) selon l'une des revendications 1 à 9, **caractérisé en ce que** la pièce de pression (8) comporte un dispositif de rattrapage d'usure (26), et **en ce que** la première surface d'actionnement (7) est divisée en deux et est disposée de part et d'autre du dispositif de rattrapage d'usure (26).

11. Dispositif de freinage (1) selon l'une des revendications 1 à 10, **caractérisé en ce que** le dispositif de freinage (1) présente un logement de guidage (27) pour la liaison avec un composant de palier (4) en formant un palier du dispositif de freinage (1) déplaçable dans la direction d'une première droite.

12. Dispositif de freinage (1) selon la revendication 11, **caractérisé en ce qu'**une pièce d'amortissement de mouvement (29) couplée au corps d'écartement (12) pour amortir un mouvement de translation du corps d'écartement (12) par rapport au composant de palier (28) est formée dans le logement de guidage (27) parallèlement à la première droite.

13. Roulement de roue comprenant un disque de frein faisant office de corps de frein (11) et un dispositif de freinage (1) selon l'une des revendications 1 à 12, **caractérisé en ce qu'**un axe de rotation du disque de frein est parallèle à la première droite.

14. Véhicule comprenant au moins un roulement de roue selon la revendication 13.
